Europäisches Patentamt

European Patent Office

Office européen des brevets

(19)

(11) Veröffentlichungsnummer : **0 470 958 B1**

(12) # EUROPÄISCHE PATENTSCHRIFT

(45) Veröffentlichungstag der Patentschrift :
28.04.93 Patentblatt 93/17

(51) Int. Cl.$^5$ : **G01B 7/14**

(21) Anmeldenummer : **90902614.8**

(22) Anmeldetag : **12.02.90**

(86) Internationale Anmeldenummer :
**PCT/DE90/00090**

(87) Internationale Veröffentlichungsnummer :
**WO 90/12274 18.10.90 Gazette 90/24**

(54) **BERÜHRUNGSLOS ARBEITENDES WEGMESSSYSTEM.**

(30) Priorität : **30.03.89 DE 3910297**

(43) Veröffentlichungstag der Anmeldung :
**19.02.92 Patentblatt 92/08**

(45) Bekanntmachung des Hinweises auf die
Patenterteilung :
**28.04.93 Patentblatt 93/17**

(84) Benannte Vertragsstaaten :
**DE GB**

(56) Entgegenhaltungen :
**DE-A- 3 801 828**
**DE-B- 1 900 894**

(73) Patentinhaber : **Micro-Epsilon Messtechnik GmbH & Co. KG**
**Königbacher Strasse 15**
**W-8359 Ortenburg (DE)**

(72) Erfinder : **HRUBES, Franz**
**Karpfham Bhf. 16**
**W-8399 Rottalmünster (DE)**

(74) Vertreter : **Naumann, Ulrich et al**
**Ullrich & Naumann, Patentanwälte,**
**Gaisbergstrasse 3**
**W-6900 Heidelberg 1 (DE)**

EP 0 470 958 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein berührungslos mit Wechselstrom arbeitendes Wegmeßsystem mit einem eine Meßseite und eine Anschlußseite aufweisenden Sensor, einer Versorgungs/Auswerteelektronik und einem vom Sensor zu der Versorgungs-/Auswerteelektronik führenden Kabel mit Innenleitern, wobei der Sensor ein Sensorgehäuse, mindestens eine in dem Sensorgehäuse angeordnete Spule mit elektrisch isolierten Windungen, von den Innenleitern des Kabels zur Spule bzw. zu den Spulen führende Anschlußleitungen und ggf. eine die Spule bzw. die Spulen und die Anschlußleitungen fixierende Einbettmasse aufweist.

Berührungslos arbeitende Wegmeßsysteme sind seit Jahren aus der Praxis in verschiedenen Ausführungen bekannt. Sie lassen sich nach ihrer prinzipiellen Funktionsweise einerseits in Wegmeßsysteme auf Wirbelstrombasis, induktive und kapazitive Wegmeßsysteme, andererseits in optische oder akustische Wegmeßsysteme gliedern.

Die vorliegende Erfindung bezieht sich auf berührungslose Wegmeßsysteme mit einem mindestens eine Spule aufweisenden Sensor, also auf Wegmeßsysteme, die entweder auf Wirbelstrombasis oder induktiv arbeiten.

Bei nach dem Wirbelstrom-Meßverfahren arbeitenden Wegmeßsystemen durchfließt ein hochfrequenter Wechselstrom eine üblicherweise in einem Gehäuse eingegossene Spule, die durch Parallelschaltung von Kapazitäten einen Schwingkreis bildet. Dabei geht von der Spule ein elektromagnetisches Spulenfeld aus. Dieses Spulenfeld induziert in einem leitfähigen Objekt Wirbelströme, die dem Schwingkreis Energie entziehen. Bei höheren Arbeitsfrequenzen tritt vor allem die Rückwirkung der induzierten Wirbelströme in Erscheinung, die als Gegeninduktion den Realteil der Spulenimpedanz ändert. Der Einfluß auf den Imaginärteil der Spulenimpedanz hängt dabei von den magnetischen Eigenschaften und der Arbeitsfrequenz ab. Nichtmagnetische Meßobjekte verringern bei Annäherung an die Spule die Spuleninduktivität.

Abhängig vom Abstand ändert sich die Schwingkreisamplitude. Demoduliert, linearisiert und ggf. verstärkt liefert die Amplitudenänderung eine proportional zum Abstand zwischen Sensor und Meßobjekt sich ändernde Spannung.

Beim induktiven Meßverfahren ist die im Sensor angeordnete Spule ebenfalls Teil eines Schwingkreises. Bei Annäherung eines leitfähigen Meßobjektes ändert sich hauptsächlich der Imaginärteil der Spulenimpedanz. Dies gilt vor allem für niedrige Arbeitsfrequenzen, d.h. für Arbeitsfrequenzen bis mehrere 100 kHz. Magnetische Objekte vergrößern bei Annäherung an die Spule die Induktivität, nichtmagnetische Objekte verringern sie. Auch hier ist ein demoduliertes Ausgangssignal proportional zum Abstand zwischen Sensor und Meßobjekt.

Sowohl beim Wirbelstrommeßverfahren als auch beim induktiven Meßverfahren wird die Änderung der Impedanz einer in einem Sensor angeordneten Meßspule bei Annäherung eines elektrisch und/oder magnetisch leitfähigen Meßobjektes gemessen. Das Messignal entspricht also dem Meßabstand.

Die durch die Abstandsänderung zwischen Sensor und Meßobjekt hervorgerufene Impedanzänderung ergibt sich also einerseits aus einer Änderung der Induktivität der Spule, andererseits aus der Änderung des Realwiderstandes der Spule. Der Imaginärteil der Spulenimpedanz wird u.a. durch die Eigenkapazität der Meßspule und damit durch die gesamte Ausgestaltung des Sensors vorgegeben. Die beim Messen aus dem Sensor austretenden elektrischen Feldlinien sind demnach mitbestimmend für die Eigenkapazität des Sensors.

Nähert sich dem Sensor ein elektrisch leitfähiges Meßobjekt, so wird dadurch auch das vom Sensor ausgehende elektrische Feld beeinflußt. Dies ist auch der Fall, wenn sich ein Objekt mit relativ hoher Dielektrizitätszahl nähert. Folglich verursacht ein zwischen dem Sensor und dem eigentlichen Meßobjekt befindlicher Werkstoff mit hoher Dielektrizitätszahl eine Änderung der Eigenkapazität und damit der Gesamtimpedanz der Meßspule.

Gelangt beispielsweise Wasser ($\varepsilon r \approx 80$) zwischen Sensor und Meßobjekt, so wird die Eigenkapazität der Meßspule beeinflußt. Bei gebräuchlichen Sensoren liegt dabei die Änderung der Kapazität bei wenigen pF. Ist das Wasser - oder ein anderer Werkstoff mit hoher Dielektrizitätszahl - dauernd vorhanden, so kann der Einfluß des Wassers auf die Eigenkapazität der Spule bei der Kalibrierung des Meßsystems berücksichtigt werden. Ist jedoch der Raum zwischen Sensor und Meßobjekt beispielsweise nicht spritzwassergeschützt, gelangt also Wasser unkontrolliert und nur zeitweise in die Meßstrecke, so treten Meßfehler bei der Abstandsmessung auf, die mit dem Abstand zwischen Sensor und Meßobjekt zunehmen. Dies liegt daran, daß eine Bewegung des Meßobjekts bei großem Abstand zwischen Sensor und Meßobjekt nur eine geringe Impedanzänderung der Spule bewirkt.

Die Arbeitsfrequenz bzw. Resonanzfrequenz des Sensorschwingkreises berechnet sich nach der bekannten Formel

$$f(Res) = \frac{1}{2 \, * \, \sqrt{L \, * \, (C_{Spule} \, + \, C_{Eerg})}} \, ,$$

wobei $C_{Spule}$ die Eigenkapazität der Senorspule und $C_{Erg}$ die Ergänzungskapazität für die gewünschte Arbeitsfrequenz ist.

Bei niedrigen Frequenzen und gegebener Induktivität L ist die prozentuale Änderung der Resonanzfrequenz nur gering, da die Kapazität $C_{Erg}$ wesentlich größer als die Eigenkapazität der Spule ist. Die prozentuale Änderung der Resonanzfrequenz nimmt jedoch annähernd quadratisch mit der Frequenz zu, da entsprechend $C_{Erg}$ abnimmt. Das bedeutet, daß der Einfluß bei 1 MHz 100 mal so groß ist wie bei 100 kHz.

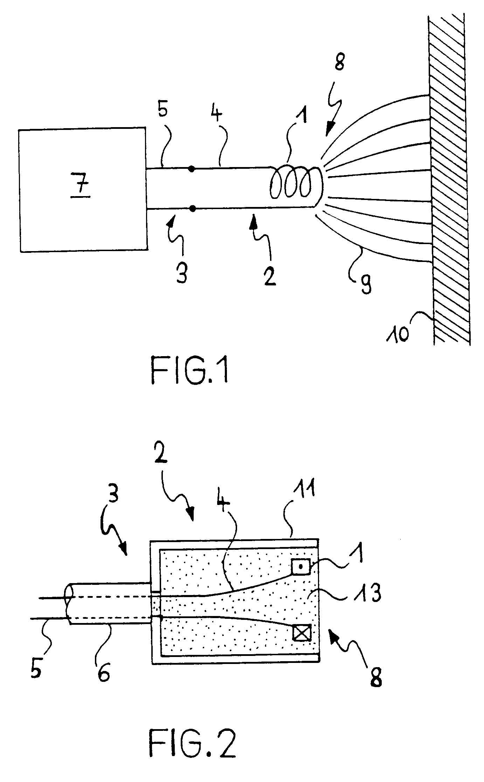

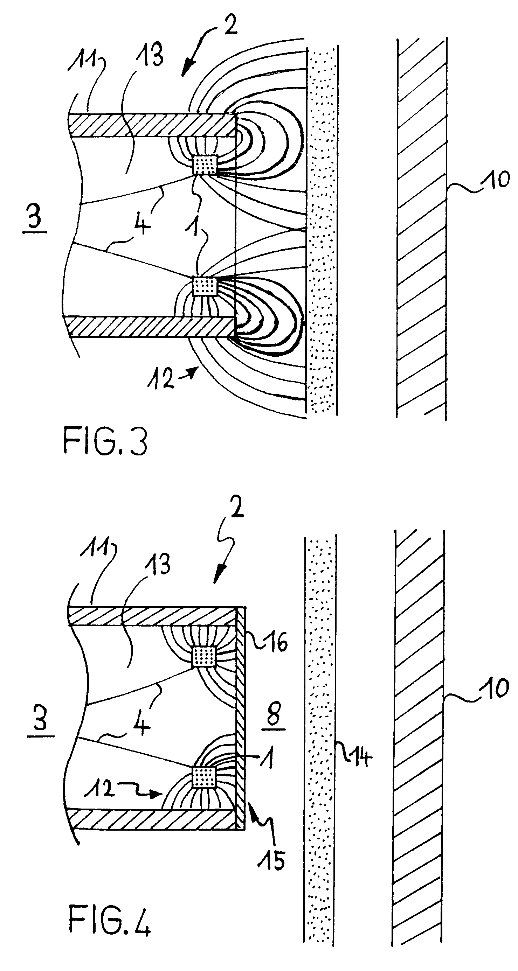

Für sich ist bereits aus der DE-A-3 801 828 ein Verschiebungsfühler bekannt, bei dem ein Dauermagnet an einem lebenden Körper angebracht und als Maß für die Bewegung oder Schwingung des lebenden Körpers die Änderung des Flusses des Dauermagneten gemessen wird. Dieser bekannte Verschiebungsfühler weist gemäß der Darstellung in Fig. 2 ein Gehäuse und eine in dem Gehäuse eingesetzte nicht magnetische leitende Abschirmkapsel auf. Gemäß der Darstellung in Fig. 3 handelt es sich bei der Abschirmkapsel um einen dielektrischen thermoplastischen Kunststoff. Desweiteren sind innerhalb des Gehäuses Induktionsspulen vorgesehen. Die Abschirmkapsel dient in erster Linie dazu, daß eine Verarbeitungsschaltung durch elektromagnetische bzw. elektrische Felder des Verschiebungsfühlers nicht gestört bzw. beeinflußt wird.

Weiter ist aus der DE-B-1 900 894 - für sich - ein Verfahren zur Herstellung eines induktiven Meßumformers zur Abstandsmessung bekannt. Dabei offenbart die in Rede stehende Druckschrift auch Sensoren, wobei diese Sensoren einerseits von einer Metallhülse umgeben sind, andererseits auf ihrer Meßseite durch ein Epoxy-Harz geschützt sind. Die bei dem in Rede stehenden bekannten Sensor auf der Meßseite vorgesehene Epoxy-Harzmasse dient lediglich der Fixierung und dem mechanischen Schutz der Spule.

Der Erfindung liegt die Aufgabe zugrunde, ein berührungslos arbeitendes Wegmeßsystem zu schaffen, bei dem der Einfluß von Flüssigkeiten oder Festkörpern mit hoher Dielektrizitätszahl auf die Meßwerte weitgehend eliminiert ist.

Das erfindungsgemäße, berührungslos arbeitende Wegmeßsystem löst die zuvor aufgezeigte Aufgabe dadurch, daß auf der Meßseite des Sensors eine Abschirmung angebracht ist, die einerseits für von der Spule bzw. von den Spulen ausgehende elektrische Feldlinien zumindest weitgehend undurchlässig, andererseits für von der Spule bzw. von den Spulen ausgehende elektromagnetische Feldlinien zumindest weitgehend durchlässig ist.

Erfindungsgemäß ist erkannt worden, daß der Einfluß von in der Meßstrecke befindlichen Flüssigkeiten oder Festkörpern hoher Dielektrizitätszahl auf die Meßwerte eliminiert werden kann, wenn die vom Sensor normalerweise ausgehenden elektrischen Feldlinien nach außen hin abgeschirmt werden, d.h. wenn das elektrische Feld allseits geschlossen wird. Das zur Abschirmung des elektrischen Feldes verwendete Material darf dabei das zur Messung erforderliche elektromagnetische Feld nicht oder nur geringfügig beeinflussen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt

Fig. 1    in schematischer Darstellung das der berührungslosen Wegmessung zugrundeliegende Meßprinzip,

Fig. 2    in schematischer Darstellung einen typischen Sensor, der nach dem Meßprinzip aus Fig. 1 arbeitet,

Fig. 3    in schematischer Darstellung, vergrößert und ausschnittsweise den Sensor aus Fig. 2 und den Verlauf der vom Sensor ausgehenden elektrischen Feldlinien und

Fig. 4    in schematischer Darstellung einen Sensor mit Abschirmung nach dem erfindungsgemäßen, berührungslos arbeitenden Wegmeßsystem.

Fig. 1 zeigt das der berührungslosen Wegmessung sowohl nach dem Wirbelstrom-Meßverfahren als auch nach dem induktiven Meßverfahren zugrundeliegende bekannte Meßprinzip. Ein der Einfachheit halber lediglich durch eine Spule (1) dargestellter Sensor (2) ist auf seiner Anschlußseite (3) mit seinen Anschlußleitungen (4) über Innenleiter (5) eines Kabels (6) mit einer Versorgungs-/Auswerteelektronik (7) verbunden. Von der Spule (1) bzw. dem Sensor (2) aus erstreckt sich ein elektromagnetisches Feld bzw. verlaufen elektromagnetische Feldlinien (9) zu einem Meßobjekt (10) und werden dort geschlossen. Im Falle eines elektrisch leitenden Meßobjektes (10) werden einerseits im Meßobjekt (10) Wirbelströme induziert, erfolgt andererseits eine Änderung der Induktivität der Spule (1). Bei ferritischen Meßobjekten (10) erfolgt eine Induktivitätsänderung der Spule (1).

In Fig. 2 ist der prinzipielle Aufbau eines bekannten, nach dem Wirbelstrom-Meßverfahren oder nach dem induktiven Meßverfahren arbeitenden berührungslosen Sensors (2) dargestellt. Der Sensor (2) besteht im wesentlichen aus einem Sensorgehäuse (11), der im Sensorgehäuse (11) angeordneten Spule (1), den von der Spule (1) zu dem Kabel (6) bzw. zu den Innenleitern (5) des Kabels (6) führenden Anschlußleitungen (4) und einer Einbettmasse (13) zur Fixierung der Spule (1) innerhalb des Sensorgehäuses (11). Das zu der in Fig. 2 nicht gezeigten Versorgungs-/Auswerteelektronik (7) führende Kabel (6) ist vorzugsweise gegen elektrische und elektromagnetische Felder abgeschirmt. Dabei handelt es sich vorzugsweise um ein Koaxialkabel.

Im Betrieb des in Fig. 2 dargestellten, aus der Praxis bekannten Sensors treten sowohl die zur Wegmessung erforderlichen elektromagnetischen Feldlinien als auch elektrische Feldlinien in Richtung des Meßobjektes nach außen. Fig. 3 zeigt deutlich den Einfluß eines zwischen dem Sensor (2) und dem eigentlichen Meßobjekt (10) - in der Meßstrecke - befindlichen Objektes (14) mit relativ großer Dielektrizitätszahl $\varepsilon_r$. Die daraus resultierende Beeinflussung der elektrischen Feldlinien (12) hat eine Änderung der Eigenkapazität der Spule (1) zur Folge.

Fig. 4 zeigt teilweise den Sensor (2) eines erfindungsgemäßen, berührungslos arbeitenden Wegmeßsystems. Wie in den Fig. 1 und 2 gezeigt, besteht ein solches Wegmeßsystem im wesentlichen aus dem eine Meßseite (8) und eine Anschlußseite (3) aufweisenden Sensor (2), einer Versorgungs-/Auswerteelektronik (7) und dem vom Sensor (2) zu der Versorgungs-/Auswerteelektronik führenden Kabel (6) mit zwei Innenleitern (5). Bei der Darstellung in Fig. 4 ist der Einfachheit halber lediglich die Meßseite (8) des Sensors (2) gezeigt.

Zu dem Sensor (2) gehören das Sensorgehäuse (11), die im Sensorgehäuse (11) angeordnete Spule (1), zwei von den beiden Innenleitern (5) des Kabels (6) zur Spule (1) führende Anschlußleitungen (4) und die die Spule (1) und die Anschlußleitungen (4) fixierende Einbettmasse (13). Innerhalb des Sensorgehäuses könnte eine weitere Spule - beispielsweise eine Referenzspule zur Temperaturkompensation - angeordnet sein. Auch eine Anordnung mehrerer als Meßspulen arbeitender Spulen innerhalb des Sensorgehäuses wäre möglich.

Bzgl. der Einbettmasse ist darauf hinzuweisen, daß das dazu verwendete Material in Abhängigkeit von den Einsatzbedingungen des Sensors - Einsatz unter hohen Temperaturen, unter starken Druckschwankungen, in Schadatmosphäre etc. - auszuwählen ist.

Fig. 4 zeigt deutlich, daß auf der Meßseite (8) des Sensors (2) eine Abschirmung (15) vorgesehen ist. Diese Abschirmung (15) ist einerseits für von der Spule (1) ausgehende elektrische Feldlinien (12) weitgehend undurchlässig, andererseits für von der Spule (1) ausgehende, in Fig. 4 nicht gezeigte elektromagnetische Feldlinien weitgehend durchlässig.

Die zuvor erwähnte Abschirmung könnte in einer bevorzugten Ausführungsform des erfindungsgemäßen, berührungslos arbeitenden Wegmeßsystems direkt an der Spule angeordnet sein. Dabei wäre es besonders vorteilhaft, die Abschirmung für die elektrischen Feldlinien als Spulenummantelung auszuführen. Beispielsweise könnte die Abschirmung in unter fertigungstechnischen Gesichtspunkten einfacher Weise als die Spule umhüllende Lackschicht ausgeführt sein. Auch wäre es denkbar, die Abschirmung auf die Spule aufzudampfen, wodurch besonders dünne Schichten erzeugt werden könnten. Eine solche Ausgestaltung der Abschirmung hätte den Vorteil, daß die Abschirmung gemeinsam mit der Spule innerhalb des Sensorgehäuses von der Einbettmasse geschützt wäre.

Nach dem in Fig. 4 dargestellten Ausführungsbeispiel ist die Abschirmung (15) als auf der Meßseite (8) des Sensors (2) vorgesehene Abdeckung (16) ausgeführt. Die Abdeckung (16) schließt dabei das Sensorgehäuse (11) meßseitig ab und könnte daher gleichzeitig zum Schutz der Spule (1) oder der Einbettmasse (13) vor aggressiven Medien, Temperatur oder Drücken dienen.

Die Abdeckung könnte auf unterschiedliche Arten am Sensor befestigt sein. Beispielsweise könnte die Abdeckung in konstruktiv einfacher Weise meßseitig auf das Sensorgehäuse aufgesteckt sein. Auch eine schraubbare Anbringung der Abdeckung am Sensorgehäuse wäre denkbar. Voranstehende Anbringungsmöglichkeiten der Abdeckung wären insoweit vorteilhaft, als die Abdeckung bei Bedarf, beispielsweise im Falle einer Beschädigung, einfach austauschbar wäre.

Ebenso wäre es denkbar, die Abdeckung adhäsiv, z.B. durch Kleben, mit dem Sensorgehäuse bzw. mit der Einbettmasse des Sensors zu verbinden. Die Abdeckung könnte schließlich auch materialschlüssig mit dem Sensorgehäuse verbunden sein. Im Gegensatz zu der zuvor erörterten abnehmbaren Abdeckung bildet die fest mit dem Sensorgehäuse verbundene Abdeckung eine wirksame Abdichtung des Sensorgehäuses, die insbesondere beim Einsatz des Sensors in Schadatmosphäre von Vorteil ist.

Im folgenden soll nun erörtert werden, welche Werkstoffe für die Abschirmung der vom Sensor ausgehenden elektrischen Feldlinien in Frage kommen. Beispielsweise läßt sich eine geeignete Abschirmung des elektrischen Feldes durch einen elektrisch leitfähigen Werkstoff erreichen. Damit jedoch nicht auch gleichzeitig das zur Messung erforderliche elektromagnetische Feld abgeschirmt wird, muß eine solche Abschirmung dünnschichtig ausgeführt sein. Die Abschirmung könnte entsprechend auch aus einem leitfähigen Kunststoff oder aus Graphit bestehen. Wesentlich für eine Abschirmung des vom Sensor ausgehenden elektrischen Feldes mittels elektrisch leitfähiger Werkstoffe ist jedenfalls die Tatsache, daß die Abschirmung dünnschichtig ausgebildet sein muß und daß dabei entsprechend der Eindringtiefe des elektromagnetischen Feldes dieses nur unerheblich bedämpft wird.

Ist dagegen die Abschirmung in besonders vorteilhafter Weise aus Keramik hergestellt, so gibt es nur sehr geringe bzw. gar keine Dämpfungsprobleme bzgl. des elektromagnetischen Feldes. Bei einer Abschirmung aus Keramik, wie sie beispielsweise in Vielschichtkondensatoren Verwendung findet, d.h. bei einer Abschirmung mit einer Dielektrizitätszahl $\varepsilon r > 1000$, findet praktisch keine Bedämpfung des elektromagnetischen Feldes statt, das elektrische Feld ist dabei jedoch weitgehend abgeschirmt.

Abschließend sei darauf hingewiesen, daß der Kern der vorliegenden Erfindung - Abschirmung des elektrischen Feldes und Durchlassen des elektromagnetischen Feldes eines berührungslos arbeitenden Sensors - bei allen bislang bekannten, nach dem Wirbelstrommeßverfahren oder nach dem induktiven Meßverfahren arbeitenden Wegmeßsystemen realisiert werden kann.

**Patentansprüche**

1. Berührungslos mit Wechselstrom arbeitendes Wegmeßsystem mit einem eine Meßseite (8) und eine Anschlußseite (3) aufweisenden Sensor (2), einer Versorgungs-/Auswerteelektronik (7) und einem vom Sensor (2) zu der Versorgungs-/Auswerteelektronik (7) führenden Kabel (6) mit Innenleitern (5), wobei der Sensor (2) ein Sensorgehäuse (11), mindestens eine in dem Sensorgehäuse (11) angeordnete Spule (1) mit elektrisch isolierten Windungen, von den Innenleitern (5) des Kabels (6) zur Spule (1) bzw. zu den Spulen (1) führende Anschlußleitungen (4) und ggf. eine die Spule (1) bzw. die Spulen (1) und die Anschlußleitungen (4) fixierende Einbettmasse (13) aufweist,
**dadurch gekennzeichnet,** daß auf der Meßseite (8) des Sensors (2) eine Abschirmung (15) angebracht ist, die einerseits für von der Spule (1) bzw. von den Spulen (1) ausgehende elektrische Feldlinien (12) zumindest weitgehend undurchlässig, andererseits für von der Spule (1) bzw. von den Spulen (1) ausgehende elektromagnetische Feldlinien (9) zumindest weitgehend durchlässig ist.

2. Wegmeßsystem nach Anspruch 1, dadurch gekennzeichnet, daß die Abschirmung direkt an der Spule bzw. an den Spulen angeordnet ist.

3. Wegmeßsystem nach Anspruch 2, dadurch gekennzeichnet, daß die Abschirmung als Spulenummantelung ausgeführt ist.

4. Wegmeßsystem nach Anspruch 3, dadurch gekennzeichnet, daß die Abschirmung als die Spule bzw. die Spulen umhüllende Lackschicht ausgeführt ist.

5. Wegmeßsystem nach Anspruch 3, dadurch gekennzeichnet, daß die Abschirmung auf die Spule bzw. die Spulen aufgedampft ist.

6. Wegmeßsystem nach Anspruch 1, dadurch gekennzeichnet, daß die Abschirmung (15) als Abdeckung 16 auf der Meßseite (8) des Sensors (2) ausgeführt ist.

7. Wegmeßsystem nach Anspruch 6, dadurch gekennzeichnet, daß die Abdeckung (16) das Sensorgehäuse (11) abschließt.

8. Wegmeßsystem nach Anspruch 6 oder 7, dadurch gekennzeichnet, daß die Abdeckung auf das Sensorgehäuse aufgesteckt ist.

9. Wegmeßsystem nach Anspruch 6 oder 7, dadurch gekennzeichnet, daß die Abdeckung auf das Sensorgehäuse aufgeschraubt ist.

10. Wegmeßsystem nach Anspruch 6 oder 7, dadurch gekennzeichnet, daß die Abdeckung adhäsiv mit dem Sensorgehäuse bzw. mit der Einbettmasse des Sensors verbunden ist.

11. Wegmeßsystem nach Anspruch 6 oder 7, dadurch gekennzeichnet, daß die Abdeckung materialschlüssig mit dem Sensorgehäuse verbunden ist.

12. Wegmeßsystem nach einem der Ansprüche 1 bis 11, dadurch gekennzeichnet, daß die Abschirmung dünnschichtig ausgeführt ist und aus einem elektrisch leitfähigen Werkstoff besteht.

13. Wegmeßsystem nach Anspruch 12, dadurch gekennzeichnet, daß die Abschirmung aus einem leitfähigen Kunststoff besteht.

14. Wegmeßsystem nach Anspruch 12, dadurch gekennzeichnet, daß die Abschirmung aus Graphit besteht.

15. Wegmeßsystem nach einem der Ansprüche 1 bis 11, dadurch gekennzeichnet, daß die Abschirmung aus Keramik besteht.

16. Wegmeßsystem nach Anspruch 15, dadurch gekennzeichnet, daß die Abschirmung eine relative Dielektrizitätszahl $\varepsilon r > 1000$ aufweist.

## Claims

1. Contactless alternating current travel measuring system, with a sensor which has a measuring side (8) and a connection side (3), an electronic supply / evaluation system (7), and a cable (6) leading from the sensor (2) to the electronic supply / evaluation system (7) and having internal conductors (5), wherein the sensor (2) has a sensor casing (11), at least one coil (1) arranged in the sensor casing (11) with electrically insulated windings, connection leads (4) leading from the internal conductors (5) of the cable (6) to the coil (1) or coils (1), and optionally a bedding compound (13) securing the coil (1) or coils (1) and the connection leads (4), characterised in that on the measuring side (8) of the sensor (2) there is a shield (15), which is at least largely opaque to the electrical field waves (12) emitted by the coil (1) or coils (1), but is largely transparent to the electromagnetic field waves (9) emitted by the coil (1) or coils (1).

2. Travel measuring system according to Claim 1, characterised in that the shield is arranged directly on the coil or coils.

3. Travel measuring system according to Claim 2, characterised in that the shield is in the form of a coil casing.

4. Travel measuring system according to Claim 3, characterised in that the shield is in the form of a layer of lacquer encasing the coil or coils.

5. Travel measuring system according to Claim 3, characterised in that the shield is vacuum metallised on the coil or coils.

6. Travel measuring system according to Claim 1, characterised in that the shield (15) is arranged as a cover (16) on the measuring side (8) of the sensor (2).

7. Travel measuring system according to Claim 6, characterised in that the cover (16) seals the sensor housing (11).

8. Travel measuring system according to either of Claims 6 or 7, characterised in that the cover is disposed on the sensor housing.

9. Travel measuring system according to either of Claims 6 or 7, characterised in that the cover is screwed onto the sensor housing.

10. Travel measuring system according to either of Claims 6 or 7, characterised in that the cover is joined adhesively to the sensor housing or to the sensor bedding compound.

11. Travel measuring system according to either of Claims 6 or 7, characterised in that the cover is integral with the sensor housing.

12. Travel measuring system according to any one of Claims 1 to 11, characterised in that the shield is in the form of a thin layer and comprises an electrically conductive material.

13. Travel measuring system according to Claim 12, characterised in that the shield comprises a conductive synthetic material.

**14.** Travel measuring system according to Claim 12, characterised in that the shield consists of graphite.

**15.** Travel measuring system according to any one of Claims 1 to 11, characterised in that the shield consists of ceramics.

**16.** Travel measuring system according to Claim 15, characterised in that the shield has a relative dielectric constant of $\varepsilon r > 1000$.

**Revendications**

**1.** Système de mesure sans contact de déplacements, fonctionnant avec du courant alternatif, avec un capteur (2) présentant un côté de mesure (8) et un côté de raccordement (3), avec un circuit électronique d'alimentation/d'évaluation (7), et avec un câble (6) avec des conducteurs intérieurs (5), reliant le capteur au circuit électronique d'alimentation/d'évaluation, le capteur (2) présentant un boîtier de capteur (11), au moins une bobine (1) avec des spires électriquement isolées disposée dans le boîtier de capteur (11), des lignes de raccordement (4) allant des conducteurs intérieurs (5) du câble (6) vers la bobine (1) ou vers les bobines (1) et le cas échéant une masse d'enrobage (13) fixant la bobine (1) ou les bobines (1) et les lignes de raccordement (4),
caractérisé par le fait que sur le côté de mesure (8) du capteur (2) est disposé un blindage (15), lequel d'une part est tout au moins largement imperméable pour les lignes de champ électriques (12) issues de la bobine (1) ou des bobines (1), et qui d'autre part est tout au moins largement perméable pour les lignes de champ électromagnétiques (9) issues de la bobine (1) ou des bobines (1).

**2.** Système de mesure de déplacements suivant la revendication 1, caractérisé en ce que le blindage est disposé directement sur la bobine ou sur les bobines.

**3.** Système de mesure de déplacements suivant la revendication 2, caractérisé en ce que le blindage a la forme d'un enrobage de bobine.

**4.** Système de mesure de déplacements suivant la revendication 3, caractérisé en ce que le blindage a la forme d'une couche de vernis enrobant la bobine ou les bobines.

**5.** Système de mesure de déplacements suivant la revendication 3, caractérisé en ce que le blindage est appliqué sur la bobine ou les bobines par vaporisation.

**6.** Système de mesure de déplacements suivant la revendication 1, caractérisé en ce que le blindage (15) a la forme d'un recouvrement (16) sur le côté de mesure (8) du capteur (2).

**7.** Système de mesure de déplacements suivant la revendication 6, caractérisé en ce que le recouvrement (16) clôture le boîtier du capteur (11).

**8.** Système de mesure de déplacements suivant l'une ou l'autre des revendications 6 et 7, caractérisé en ce que le recouvrement est enfiché sur le boîtier du capteur.

**9.** Système de mesure de déplacements suivant l'une ou l'autre des revendications 6 et 7, caractérisé en ce que le recouvrement est vissé sur le boîtier du capteur.

**10.** Système de mesure de déplacements suivant l'une ou l'autre des revendications 6 et 7, caractérisé en ce que le recouvrement est relié de manière adhésive au boîtier du capteur ou à la masse d'enrobage du capteur.

**11.** Système de mesure de déplacements suivant l'une ou l'autre des revendications 6 et 7, caractérisé en ce que le recouvrement est relié sans solution de continuité au boîtier du capteur.

**12.** Système de mesure de déplacements suivant l'une quelconque des revendications de 1 à 11, caractérisé en ce que le blindage est exécuté sous forme de couche mince et est constitué par un matériau conducteur électrique.

**13.** Système de mesure de déplacements suivant la revendication 12, caractérisé en ce que le blindage est constitué par une matière plastique conductrice.

14. Système de mesure de déplacements suivant la revendication 12, caractérisé en ce que le blindage est constitué par du graphite.

15. Système de mesure de déplacements suivant l'une quelconque des revendications de 1 à 11, caractérisé en ce que le blindage est constitué par un matériau céramique.

16. Système de mesure de déplacements suivant la revendication 15, caractérisé en ce que le blindage a une constanté diélectrique relative de $\varepsilon_r > 1000$.

FIG.1

FIG.2

FIG.3

FIG.4